(19) **Europäisches Patentamt European Patent Office Office européen des brevets**

(11) **EP 2 673 935 B1**

(12) **EUROPEAN PATENT SPECIFICATION**

(45) Date of publication and mention
of the grant of the patent:
**24.04.2019 Bulletin 2019/17**

(21) Application number: **12705936.8**

(22) Date of filing: **10.02.2012**

(51) Int Cl.:
*H04L 29/06* (2006.01)          *H04L 29/08* (2006.01)

(86) International application number:
**PCT/US2012/024614**

(87) International publication number:
**WO 2012/109520 (16.08.2012 Gazette 2012/33)**

(54) **METHOD AND APPARATUS FOR DISTRIBUTION AND RECEPTION OF CONTENT**

VERFAHREN UND VORRICHTUNG ZUM VERSAND UND EMPFANG VON INHALTEN

PROCÉDÉ ET DISPOSITIF POUR LA DIFFUSION ET RÉCEPTION DE CONTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2011 US 201161441818 P**

(43) Date of publication of application:
**18.12.2013 Bulletin 2013/51**

(73) Proprietor: **InterDigital Patent Holdings, Inc.**
**Wilmington, DE 19809 (US)**

(72) Inventors:
• **LOTFALLAH, Osama**
**King of Prussia, Pennsylvania 19406 (US)**
• **LIU, Hang**
**North Potomac, Maryland 20878 (US)**
• **DE FOY, Xavier**
**Kirkland, Québec H9H 5K5 (CA)**

(74) Representative: **AWA Sweden AB**
**P.O. Box 1066**
**251 10 Helsingborg (SE)**

(56) References cited:
**WO-A1-2005/088931          US-A1- 2005 089 043**
**US-A1- 2008 222 154          US-A1- 2009 300 688**

**Description**

**BACKGROUND**

Multimedia applications over wired and wireless networks are growing rapidly. End users demand rich multimedia applications regardless of the fact that multimedia content requires huge resources from the underlying network. Centralized media servers require considerable demands towards the bandwidth of the backbone Internet protocol (IP) network. As a solution for this, network operators have placed caches and stream replicators in the operator network, called network peer.

The network peers are deployed and controlled by operators or service providers. The network peers interface with cache servers deployed by other operators or service providers. Different internet service providers (ISP) may collaborate to share some of the content delivery burden by some form of content/network peering. The network peers look different than caching within a content distribution network (CDN) since they cache content regardless of the origin. Moreover, CDN edge servers may be enhanced with network peer functionality.

ISPs may elect to perform caching of some multimedia content within a wireless local area network (WLAN) access point to serve some local users within the reach of the WLAN connection. On the other hand, popular contents may be cached in macro cell controllers. Content segmentation may be used with caching techniques considering the fact that popularity of one part of content, (e.g., the first part of a movie), may be different than popularity of the other part of the content, (e.g., the last part of a movie). This may happen due to early drop of the view, where a user may pause or end watching the content before it ends.

Patent Application US 2008/0222154 A1 relates to a decentralized algorithm for managing replicas of a resource in a peer-to-peer network to satisfy quality of service requirements. Individual nodes within the network storing a resource replica continually monitor the node performance against quality of service (QoS) parameters and when necessary, take appropriate action to either add or delete the resource, all the while informing the other nodes within the network that maintain a replica of the resource of the particular action for dynamic fluctuation of the count of resource replicas therein.

**SUMMARY**

The invention is defined by the subject matter of the independent claims. Advantageous enhancements are subject to the dependent claims.

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;

FIG. 1B is a system diagram of an example wireless transmit/receive unit (WTRU) that may be used within the communications system illustrated in FIG. 1A;

FIG. 1C is a system diagram of an example radio access network and an example core network that may be used within the communications system illustrated in FIG. 1A;

FIG. 2 shows an example of an IP Multimedia Subsystem (IMS)-based peer-to-peer content distribution system;

FIG. 3 shows two sample functions of the reconstructed quality as a function of an average bit rate between a receiver and a replica server;

FIG. 4 shows an example network architecture for Dynamic Adaptive Streaming over HTTP (DASH) streaming in accordance with one embodiment; and

FIG. 5 shows an example network architecture for Real-Time Streaming Protocol (RTSP) streaming in accordance with one embodiment.

**DETAILED DESCRIPTION**

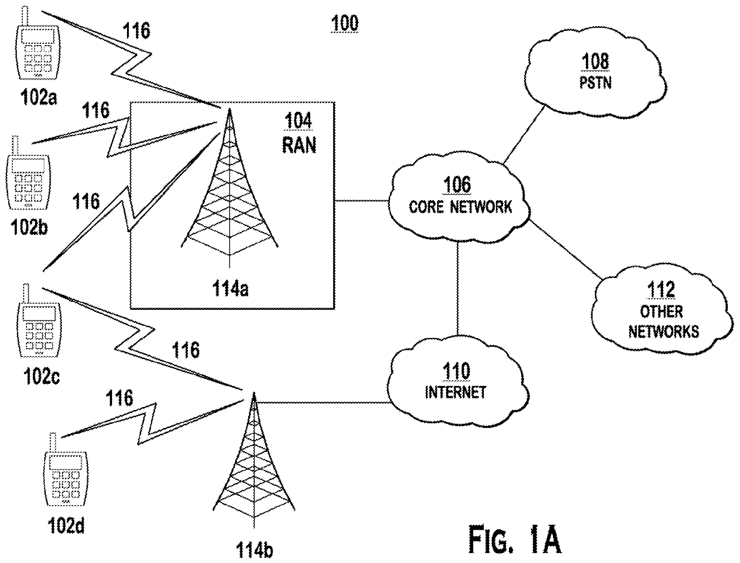

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

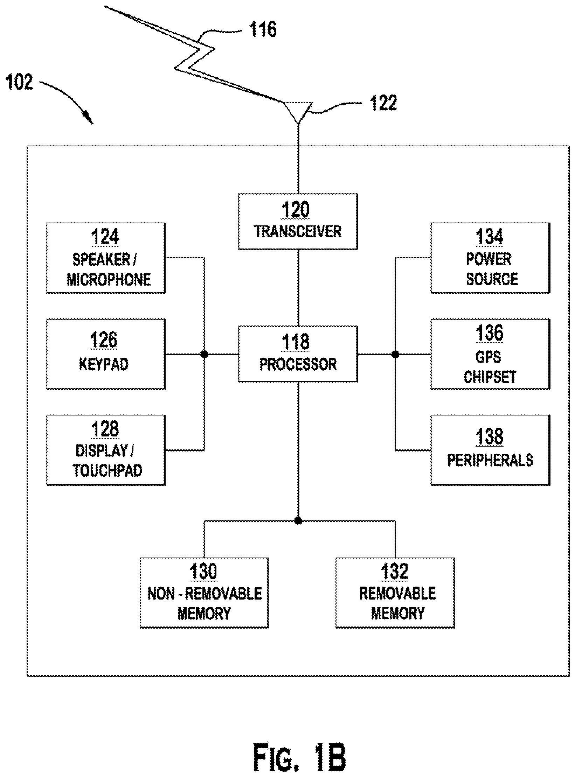

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

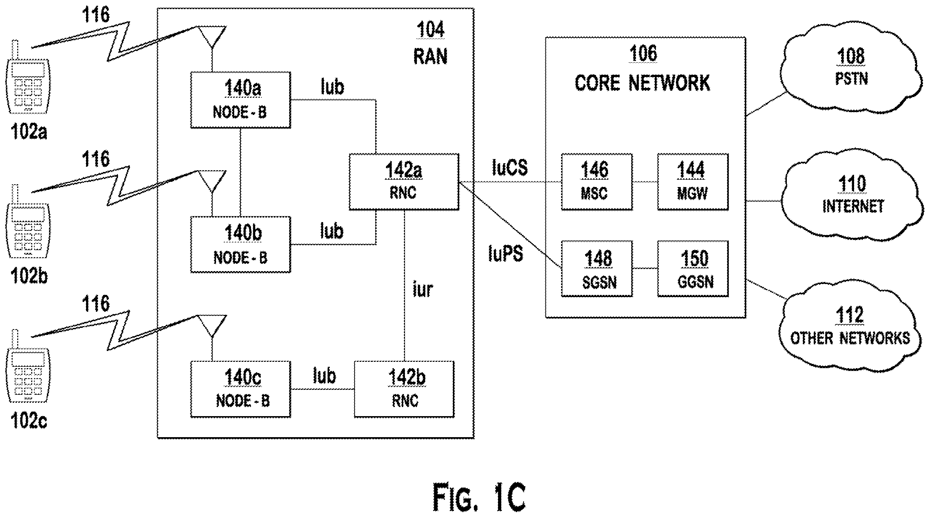

FIG. 1C is a system diagram of the RAN 104 and the core network 106 according to an embodiment. As noted above, the RAN 104 may employ a UTRA radio technology to communicate with the WTRUs 102a, 102b, 102c over the air interface 116. The RAN 104 may also be in communication with the core network 106. As shown in FIG. 1C, the RAN 104 may include Node-Bs 140a, 140b, 140c, which may each include one or more transceivers for communicating with the WTRUs 102a, 102b, 102c over the air interface 116. The Node-Bs 140a, 140b, 140c may each be associated with a particular cell (not shown) within the RAN 104. The RAN 104 may also include RNCs 142a, 142b. It will be appreciated that the RAN 104 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 104 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

Hereafter, the terms "client" and "WTRU" will be used interchangeably.

It should be noted that the embodiments may be explained with reference to a video application and an IMS-based system, but the disclosed embodiments are applicable to any applications and any system.

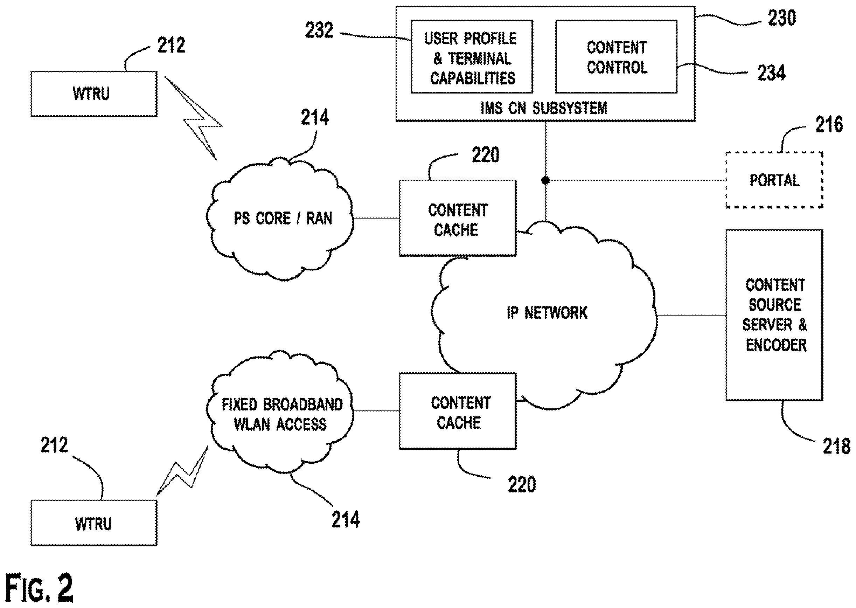

FIG. 2 shows an example of an IMS-based peer-to-peer content distribution system. A WTRU 212 requests multimedia content that is cached and controlled by the ISP. The WTRU 212 initiates a content distribution service by sending a content request via a fixed or mobile access network 214. The content request is redirected to a portal 216. Media content is distributed from a content source server/encoder 218 to content caches 220, which are closer to users. User profile and terminal capabilities information 232 stored in the IMS CN subsystem 230 provides user's preferences and terminal capabilities, which may be used to decide whether or not the client, (i.e., the WTRU), is capable of receiving the requested content. The content control function 234 in the IMS CN subsystem 230 controls how content is distributed over the network and where the WTRUs 212 may get the requested content.

The distribution of multimedia content over networks that include caching subsystems raises a replica placement problem. There are a set of multimedia data objects (i.e., content) and these objects are distributed across a set of storage nodes (i.e., content caches 220 in FIG. 2). Clients (e.g., WTRUs 212 in FIG. 2) access the data objects from one of the storage nodes. The object replica placement problem may be formulated as a problem that approximates the overall performance of certain metrics (such as minimal storage cost, minimal user access latency, network bandwidth consumption, or the like) averaged over the number of served clients.

Given network G with C clients and S server nodes, each client $c_i$ has its quality of service (QoS) constraints $d_i$, (e.g., latency, jitter, error rate, visual quality, or the like), and each server $s_j$ has its capacity constraints $l_j$, (e.g., central processing unit (CPU) load, bandwidth, storage capacity, or the like). The content replica placement issue may be solved by finding a set of servers S'such that QoS between any client $c_i$ and its server $s_{ci}$ is bounded by $d_i$. This may be solved by using static algorithms. A root server may have complete knowledge of the network and user requests. In other words, $c_i$ and $d_i$ are known in advance. The static algorithm may be implemented if the number of users and replica servers are few and does not change over time. Alternatively, the content replica placement problem may be solved by dynamic algorithms. Clients start a daemon program provided by a content distribution network (CDN) service provider to actively participate in the algorithm by estimating $d_i$ and figuring out the network topology. In other words, $c_i$ and $d_i$ do vary over time.

The content replica placement problem may be expressed as in Equation (1). The average QoS for each receiver may be expressed as equivalent to the weighted sum of each individual quality functions $Q_k$. The quality function may measure reconstructed visual quality, network delay, delay variation, or any other metric that has an impact on the perceived quality of content with a given replica placement strategy.

$$\arg\max_{S_l \in S} \sum_{l=1}^{L} \sum_{k=1}^{K} w_k Q_k(S_l, C_l), \qquad\qquad \text{Equation (1)}$$

where $\sum_{k=1}^{K} w_k = 1$, $Q_k(S_l, C_l) \geq Q_k^*$, $f(S_l) \leq F_l$, L represents the number of receivers, K represents the number of quality metrics (e.g., $k=1$: visual quality, k=2: latency, k=3: jitter, k=4: error rate, etc.), $w_k$ represents the weight of each quality metric (e.g., 0~1), $Q_k(S_l, C_l)$ represents the quality function for the quality metric $k$ for $S_l$ and $C_l$ that may be normalized (i.e., $0 \leq Q_k(S_l, C_l) \leq 1$), $S_l$ represents the content server for receiver l, $C_l$ is an input parameter for the quality function, (e.g., the receiver bit rate or packet loss ratio that may depend on the access network, or the like), $Q_k^*$ represents the minimum quality requirements, $f(S_l)$ represents the constraints on the server $S_l$ (such as load, bandwidth, and storage capacity, etc.), and $F_l$ represents the requirements on the server, such as maximum load, minimum bandwidth and storage capacity, etc. The quality metric for the quality function may cover service non-access, service failure, re-buffering, image corruption, edge noise, blurriness, blockiness, freeze image, audio quality, audio/video synchronization error, etc.

The solution is finding the minimum number of servers $S_l$ from the whole group S. For example, the x-axis of the 2-dimensional quality function may be the receiver bit rate or the packet loss ratio between a server and a client, while the y-axis of the 2-dimensional quality function may be the peak signal-to-noise ratio (PSNR), jerkiness (frame freeze), blocking effect, blurriness (details clarity), or the like, and the quality function may estimate the perceivable visual quality at the receiver side.

The quality functions may be sent from the media streaming servers to the clients. Afterward, the clients may send receiver reports to the intermediate cache proxies expressing the QoS values using the received quality functions. The intermediate cache proxies may develop an appropriate content replica placement strategy based on the received quality function values for all clients.

Alternatively, the quality functions may be sent from the media streaming servers to the intermediate cache proxies. Clients may send receiver reports to the intermediate cache proxies that include QoS values, such as the receiver bit rate, the packet loss ratio, or other input parameter(s) with respect to a particular WTRU. The intermediate cache proxies may use these client QoS values as inputs to the quality functions to estimate the average perceivable quality at each receiver.

The quality function may be a 2-dimensional or higher order function to show the correlation between the (visual) quality and various input parameters. To simplify the solution for Equation (1), the quality function may be normalized in the range [0,1] and/or modified to a monotonically increasing (or decreasing) function as in Equation (2):

$$Q_1(S_x, C_x) \geq Q_1(S_x, C_y) \quad if \quad C_x \geq C_y. \qquad\qquad \text{Equation (2)}$$

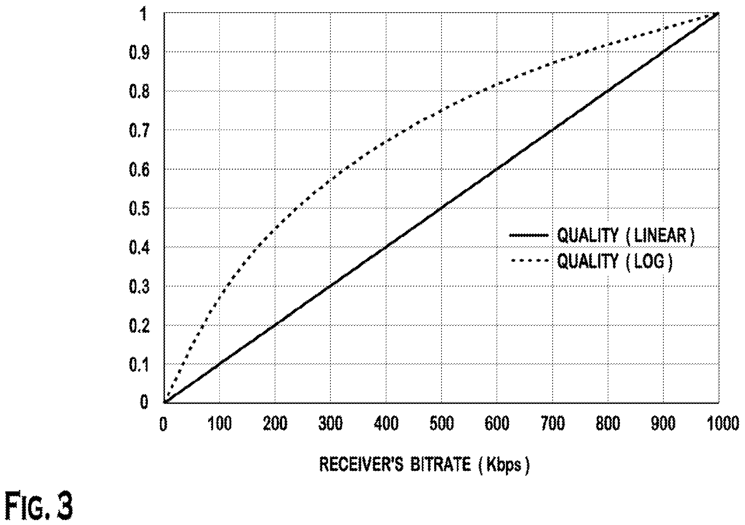

FIG. 3 shows two sample functions of the reconstructed quality as a function of $C_l$. In FIG. 3, the average bit rate between the receiver and the replica server is used as an example, but any other input parameter(s) (e.g., packet loss ratio, etc.) may be used. The first function (Equation (3)) represents the linear relationship between the reconstructed quality and $C_l$, which simplify the solution for Equation (1). The second function (Equation (4)) represents a logarithmic relationship which appears more consistent with human perception of the visual quality.

The first and second functions in FIG. 3 may be expressed as follows:

$$Q_{linear}(S_l, C_l) = \frac{C_l - C_{min}}{C_{max} - C_{min}},$$ 

Equation (3)

$$Q_{log}(S_l, C_l) = \log\left(1 + C_l \times \frac{9}{C_{max}}\right),$$

Equation (4)

where $C_{min}$ represents the minimum bit rate between a receiver $l$ and a replica server $S_l$, and $C_{max}$ represents a maximum bit rate between a receiver $l$ and a replica server $S_l$.

In one embodiment, a quality function may be sent to intermediate cache proxy servers and/or a receiver(s). Solving the cache placement problem needs to consider the actual visual quality of the original video signal. For example, low motion activity scenes (such as educational lectures) may tolerate some delay and packet losses, while high motion activity scenes (such as car racing scenes) may not tolerate such delay or packet loss. Video receivers have no information about the original visual quality of the content. This information is available at the media streaming server during the video encoding. The quality function that is calculated at the encoder side may be sent to intermediate cache proxy servers and/or a receiver(s). The quality function may be used to assist cache servers in applying a cache replacement strategy, for example, when the cache server reaches some storage limits. For example, the visual quality, (such as PSNR mean, PSNR standard deviation, or the like), of 1 Mbps of an NTSC low action movie may not be the same as 1 Mbps of an NTSC high action movie. Cache servers may use the quality function values to remove from its overloaded storage the lower quality movie given that few clients are requesting it.

The video streaming servers may provide the same multimedia content in different representations, where for each representation the quality function values are included. At the receiver side, the receiver may make a decision to select a video representation to download or stream using the higher average perceived quality values.

The embodiments disclosed herein may be implemented with media presentation description (MPD) for HTTP streaming, or session description protocol (SDP) and real time control protocol (RTCP) messages for real time streaming protocol (RTSP).

For HTTP streaming, Dynamic Adaptive Streaming over HTTP (DASH) may be used, as an example. DASH is a multimedia streaming technology where a multimedia file is partitioned into one or more segments and delivered to a client using HTTP. The encoded versions of media content and the description of the media content form a media representation. Media content comprises a single or multiple contiguous media content periods in time. Each media content period comprises one or more media content components, for example audio components in various languages and a video component.

Each media content component may have several encoded versions, referred to as media streams. Each media stream inherits the properties of the media content, the media content period, the media content component from which it was encoded and it is assigned the properties of the encoding process such as sub-sampling, codec parameters, encoding bit rate, etc.

A representation includes one or more media streams. Any single representation is sufficient to render the contained media content components. Clients may switch from representation to representation during a period in order to adapt to network conditions or other factors. Within a representation, the content may be divided in time into segments. A segment is a basic unit of data that is advertised in the MPD. Segments may contain any media data.

An MPD describes segment information, (e.g., timing, uniform resource locator (URL), media characteristics such as video resolution and bit rates, or the like). MPD is an XML document that provides information for the HTTP-streaming client to provide a streaming service to the user by sequentially downloading media data from an HTTP server and rendering the included media. A URL may be provided for each segment for retrieval with an HTTP request.

One or more representations, (e.g., versions at different resolutions or bit rates), of multimedia files may be available, and a client may select a particular representation based on network conditions, device capabilities, user preferences, or the like, enabling adaptive bitrate streaming.

For Real Time Streaming Protocol (RTSP)/Real Time Protocol (RTP) streaming, visual quality data added in Session Description Protocol (SDP) may be used during offer/answer negation, which helps allocating resources for the video session in the intermediary proxy servers, such as a Packet-switched Streaming Service (PSS) adapter, Media Resource Function (MRF), or media gateway.

In accordance with the embodiment, the quality function may be sent from the original streaming server to proxy caches and/or receivers, (i.e., the relationship (e.g., the function shown in FIG. 3) between the input parameter and the quality measures are provided to the intermediate proxy servers and/or receivers). The quality function may be included in MPD for HTTP streaming, or session description protocol (SDP) or real time control protocol (RTCP) messages for real time streaming protocol (RTSP) streaming. Carrying quality information in MPD or SDP/RTCP messages helps caching proxies make a decision about media placement and receivers select a media representation.

An embodiment for HTTP streaming is described hereafter. MPD may include a quality function at a Period level, a Representation level, or a Segment level. The quality function may be represented either as a polynomial series with defined interpolation between points, by a mean value and a standard deviation, or by a combination of the above, (e.g., in order to save MPD bandwidth it may be changed from a polynomial series at a representation level to mean and standard deviation values at a period level). Receivers may use the quality function to send HTTP receiver reports to the quality reporting server. Quality metrics for advanced video codec, such as scalable video codec (SVC), multi-view video codec (MVC), or multiple description codec (MDC) may be included.

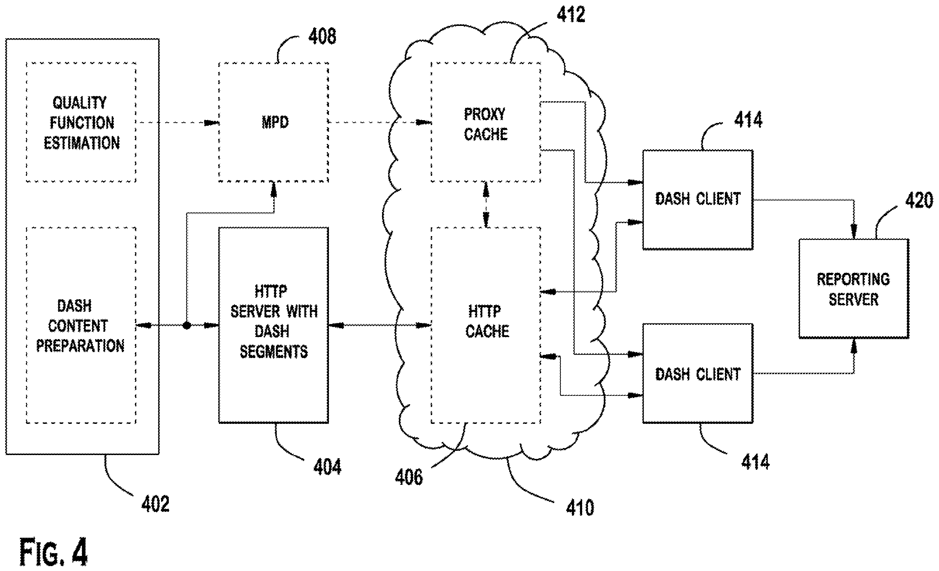

FIG. 4 shows an example network architecture for DASH streaming in accordance with one embodiment. Content is prepared at the encoding entity 402 and stored at an HTTP server 404. The content is distributed to the HTTP caches 406 over the network 410. The quality function is estimated at the encoding entity 402 and included in the MPD 408. The MPD 408 carrying the quality function may be intercepted by a proxy cache(s) 412 to optimize the media replica placement. The MPD 408 carrying the quality function may be received by DASH clients 414 and the quality function may be used in generation of detailed receiver reports about quality of service (QoS). A reporting server 420 receives the QoS reports from the DASH clients 414 and may use them for video content placement and delivery.

An example MPD is shown hereinafter. The quality function added to the MPD in accordance with one embodiment is shown in bold. In this example, the quality function is expressed as a linear polynomial time series between time (segment duration) and PSNR (i.e., (x,y) values, (x=time, y=psnr)) are included in the MPD.

```
<?xml version="1.0" encoding="UTF-8"?>
<MPD type="Live" baseUrl="http://www.example.com"
        minimumUpdatePeriodMPD="PT20S"
        quality="Polynomial, linear, x=PT10S, y=psnr"
        ...
        <Period start="PT0S">
                <Representation  mimeType="video/3gpp; codecs=s263, samr"
                        bandwidth="256000"
quality="(10,0.94),(20,0.91),(30,0.97)">
                        <SegmentInfo duration="PT10S" baseURL="rep1/">
                                <InitialisationSegmentURL sourceURL="seg-
init.3gp"/>
                                <Url sourceURL="seg-1.3gp"/>
                                <Url sourceURL="seg-2.3gp"/>
                                <Url sourceURL="seg-3.3gp"/>
                        </SegmentInfo>
                </Representation>
                <Representation  mimeType="video/3gpp; codecs=mp4v.20.9,
mp4a.E1"
                        bandwidth="128000"
quality="(10,0.75),(20,0.72),(30,0.81)">
                        <SegmentInfo duration="PT10S" baseURL="rep2/">
                                <InitialisationSegmentURL sourceURL="seg-
init.3gp"/>
                                <Url sourceURL="seg-1.3gp"/>
                                <Url sourceURL="seg-2.3gp"/>
                                <Url sourceURL="seg-3.3gp"/>
                        </SegmentInfo>
                </Representation>
        </Period>
        <Period start="PT30S">
                ...
        </Period>
</MPD>
```

An embodiment for RTSP streaming is described hereafter. SDP may be extended to include a quality function during offer/answer negotiation. The quality function may be represented for each media component as a polynomial series with defined interpolation between points, a mean value and a standard deviation, or combination of the above, (e.g., in order to save RTCP bandwidth, the sender report may be switched to mean/standard deviation valued from a polynomial series). RTCP sender reports may be sent to update the quality function in periodic intervals. The receivers may use the provided quality function to return the metrics (e.g., the y values based on the quality function) in the RTCP receiver report. Quality metrics for advanced video codec, such as scalable video codec (SVC), multi-view video codec (MVC), or multiple description codec (MDC) may be included.

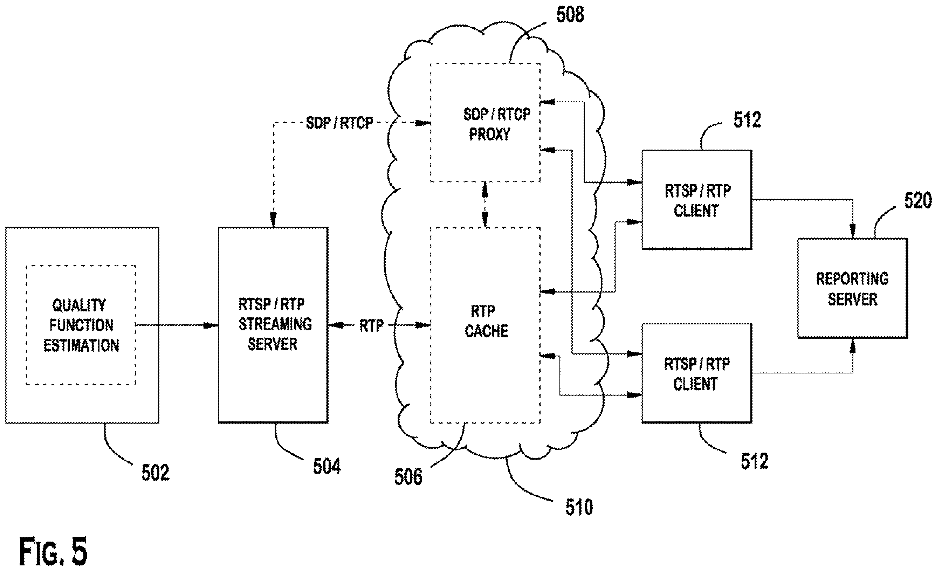

FIG. 5 shows an example network architecture for RTSP streaming in accordance with one embodiment. Content is stored at an RTSP server 504. The content is distributed to the RTP caches 506 over the network 510. The quality function is estimated at the encoding entity 502 and included in the SDP message and/or RTCP sender reports sent by the RTSP/RTP streaming server 504. The SDP messages and RTCP reports carrying the quality function may be intercepted by the proxy servers 508 and may be modified for each receiver and used for media replica placement.

The SDP message and RTCP sender reports carrying the quality function may be received by RTSP clients 512 and the quality function may be used to generate RTCP receiver reports to streaming servers 504 and generate detailed receiver reports about quality of service (QoS) to the reporting server 520. The reporting server 520 receives the QoS reports from the RTSP clients 512 and may use them for improving video placement and delivery.

An example SDP message in accordance with an embodiment is shown below. The quality function added to the SDP message is shown in bold. In this example, a quality function between packet loss ratio and PSNR/jerkiness (i.e., (x,y) values, (x=packet loss ratio, y=psnr or jerkiness)) are included in the SDP.

```
v=0
o=- 3268077682 433392265 IN IP4 63.108.142.6
s=QoE Function attached in Session Description Example
e=support@foo.com
c=IN IP4 0.0.0.0
t=0 0
a=range:npt=0-83.660000
a=3GPP-QoE-Metrics:metrics={PSNR|Jerkiness}
a=3GPP-QoE-Function-definition:PSNR={polynomial, linear,
x=loss, y=PSNR}
a=3GPP-QoE-Function-definition:Jerkiness={polynomial, cubic,
x=loss, y=jerkiness}
a=3GPP-QoE-Function-
series:PSNR={(0,1),(0.01,0.9),(0.02,0.7),(0.03,0.5),(0.04,0.4),...}
a=3GPP-QoE-Function-
series:Jerkiness={(0,1),(0.01,0.8),(0.02,0.6),(0.03,0.45),...}
a=control:*
```

The quality function may be used for content replacement. For example, when a proxy cache server is reaching its storage capacity and needs to make choices about which of the video streams should be replaced without much impact on the user's experience, the proxy cache server may select one or more of the stored content based on the quality function. For example, if the bit rate for movies are the same, but the quality functions are different, the proxy cache may keep the movie with the higher quality function and remove the movie with the lower quality function.

The quality function may also be used for storage optimization. For example, if two movies have different bit rate and frame size, but the mean quality function is same or substantially same, the proxy cache server may remove the movie with the lower bit rate and/or larger frame size.

The quality function may also be used for priority streaming. For example, a proxy cache server may allocate more jitter buffer and/or higher priority forwarding for some video streams based on the quality function.

## Claims

1. A method, carried out by a cache proxy (220), for distribution of content, the method comprising:

receiving a quality function for a content object, wherein the quality function expresses a mathematical relationship between a given quality-of-service, QoS, value observed by a receiver (212) and an estimated perceived quality of the content object at the receiver ;
receiving a reported QoS value from the receiver;
using the received quality function to estimate the perceived quality of the content object at the receiver based on the reported QoS value; and
applying a content replica placement strategy which is based at least in part on the estimated perceived quality of the content object at the receiver,
wherein implementing said content replica placement strategy comprises distributing a replica of the content

EP 2 673 935 B1

across a set of one or more additional cache proxies (220).

2. The method of claim 1, wherein the content object is streamed using Dynamic Adaptive Streaming over HyperText Transfer Protocol, HTTP, DASH, streaming, and wherein receiving the quality function comprises receiving the quality function in a Media Presentation Description, MPD, communication.

3. The method of claim 1, wherein the content object is streamed using Real Time Streaming Protocol, RTSP, streaming, and wherein receiving the quality function comprises receiving the quality function in a Session Description Protocol, SDP, communication.

4. The method of claim 1, wherein the content object is streamed using Real Time Streaming Protocol, RTSP, streaming, and wherein receiving the quality function comprises receiving the quality function in a Real-Time Control Protocol, RTCP, communication.

5. The method of claim 1, wherein the reported QoS value is selected from the group consisting of (i) a bit rate between the cache proxy and the receiver and (ii) a packet-loss ratio rate between the cache proxy and the receiver.

6. The method of claim 1, wherein the estimated perceived quality is a peak signal-to-noise ratio, PSNR.

7. The method of claim 1, wherein the estimated perceived quality is selected from the group consisting of reconstructed visual quality, network delay, delay variation, jerkiness, blocking effect, and blurriness.

8. The method of claim 1, wherein the quality function is calculated at an encoder and the quality function is based at least in part on an original visual quality of the content object.

9. The method of claim 1, further comprising:

receiving an additional QoS value from one or more additional receivers; and
using the received quality function to estimate an additional perceived quality of the content object at each of the additional receivers based on the one or more received additional QoS values,
wherein the content replica placement strategy is based at least in part on the estimated perceived quality of the content object at the receiver and at least in part on the estimated additional perceived quality of the content object at each of the additional receivers.

10. The method of claim 1, wherein applying said content replica strategy comprises removing from the network storage of said cache proxy (220) one or more of the stored content.

11. A cache proxy (220) including:

a processor; and
a data storage containing instructions executable by the processor for causing the cache proxy to carry out a set of functions, the set of functions including:

receiving a quality function for a content object, wherein the received quality function expresses a mathematical relationship between a given quality-of-service, QoS, value observed by a receiver (212) and an estimated perceived quality of the given content object at the receiver;
receiving a reported QoS value from the receiver;
using the received quality function to estimate the perceived quality of the content object at the receiver based on the reported QoS value; and
applying a content replica placement strategy based at least in part on the estimated perceived quality of the content object at the receiver, wherein applying said content replica placement strategy comprises distributing a replica of the content across a set of one or more additional cache proxies (220).

12. The cache proxy (220) of claim 11, wherein the content object is streamed using Dynamic Adaptive Streaming over HyperText Transfer Protocol, HTTP, DASH, streaming, and wherein receiving the quality function comprises receiving the quality function in a Media Presentation Description, MPD, communication.

13. The cache proxy (220) of claim 11, wherein the content object is streamed using Real Time Streaming Protocol, RTSP, streaming, and wherein receiving the quality function comprises receiving the quality function in a Session Description Protocol, SDP, communication.

14. The cache proxy (220) of claim 11, wherein the content object is streamed using Real Time Streaming Protocol, RTSP, streaming, and wherein receiving the quality function comprises receiving the quality function in a Real-Time Control Protocol, RTCP, communication.

**Patentansprüche**

1. Verfahren, das durch einen Cache-Proxy (220) ausgeführt wird, zum Verteilen von Inhalten, wobei das Verfahren Folgendes umfasst:

Empfangen einer Qualitätsfunktion für ein Inhaltsobjekt, wobei die Qualitätsfunktion eine mathematische Beziehung zwischen einem gegebenen Quality-of-Service (QoS)-Wert, der an einem Empfänger (212) anliegt, und einer geschätzten wahrgenommenen Qualität des Inhaltsobjekts in dem Empfänger ausdrückt;
Empfangen eines berichteten QoS-Wertes von dem Empfänger;
Verwenden der empfangenen Qualitätsfunktion zum Schätzen der wahrgenommenen Qualität des Inhaltsobjekts in dem Empfänger auf der Basis des berichteten QoS-Wertes; und
Anwenden einer Inhaltsreplik-Platzierungsstrategie, die mindestens zum Teil auf der geschätzten wahrgenommenen Qualität des Inhaltsobjekts in dem Empfänger basiert,
wobei das Implementieren der Inhaltsreplik-Platzierungsstrategie umfasst, eine Replik des Inhalts über einen Satz aus einem oder mehreren zusätzlichen Cache-Proxies (220) zu verteilen.

2. Verfahren nach Anspruch 1, wobei das Inhaltsobjekt unter Verwendung von Dynamic Adaptive Streaming over HyperText Transfer Protocol (HTTP) (DASH)-Streaming gestreamt wird, und wobei das Empfangen der Qualitätsfunktion das Empfangen der Qualitätsfunktion in einer Media Presentation Description (MPD)-Kommunikation umfasst.

3. Verfahren nach Anspruch 1, wobei das Inhaltsobjekt unter Verwendung von Real Time Streaming Protocol (RTSP)-Streaming gestreamt wird, und wobei das Empfangen der Qualitätsfunktion das Empfangen der Qualitätsfunktion in einer Session Description Protocol (SDP)-Kommunikation umfasst.

4. Verfahren nach Anspruch 1, wobei das Inhaltsobjekt unter Verwendung von Real Time Streaming Protocol (RTSP)-Streaming gestreamt wird, und wobei das Empfangen der Qualitätsfunktion das Empfangen der Qualitätsfunktion in einer Real-Time Control Protocol (RTCP)-Kommunikation umfasst.

5. Verfahren nach Anspruch 1, wobei der berichtete QoS-Wert ausgewählt ist aus der Gruppe bestehend aus (i) einer Bitrate zwischen dem Cache-Proxy und dem Empfänger und (ii) einer Paketverlustverhältnisrate zwischen dem Cache-Proxy und dem Empfänger.

6. Verfahren nach Anspruch 1, wobei die geschätzte wahrgenommene Qualität ein Spitzen-Signal-Rausch-Verhältnis (Peak Signal-to-Noise Ratio, PSNR) ist.

7. Verfahren nach Anspruch 1, wobei die geschätzte wahrgenommene Qualität ausgewählt ist aus der Gruppe bestehend aus rekonstruierter visueller Qualität, Netzwerkverzögerung, Verzögerungsvariation, Ruckeligkeit, Blockiereffekt, und Verschwommenheit.

8. Verfahren nach Anspruch 1, wobei die Qualitätsfunktion in einem Codierer berechnet wird und die Qualitätsfunktion mindestens zum Teil auf einer originalen visuellen Qualität des Inhaltsobjekts basiert.

9. Verfahren nach Anspruch 1, das des Weiteren Folgendes umfasst:

Empfangen eines zusätzlichen QoS-Wertes von einem oder mehreren zusätzlichen Empfängern; und
Verwenden der empfangenen Qualitätsfunktion zum Schätzen einer zusätzlichen wahrgenommenen Qualität des Inhaltsobjekts in jedem der zusätzlichen Empfänger auf der Basis des einen oder der mehreren empfangenen zusätzlichen QoS-Werte,
wobei die Inhaltsreplik-Platzierungsstrategie mindestens zum Teil auf der geschätzten wahrgenommenen Qualität des Inhaltsobjekts in dem Empfänger und mindestens zum Teil auf der geschätzten zusätzlichen wahrgenommenen Qualität des Inhaltsobjekts in jedem der zusätzlichen Empfänger basiert.

10. Verfahren nach Anspruch 1, wobei das Anwenden der Inhaltsreplik-Platzierungsstrategie umfasst, einen oder mehrere der gespeicherten Inhalte aus dem Netzwerkspeicher des Cache-Proxy (220) zu entfernen.

11. Cache-Proxy (220), der Folgendes enthält:

einen Prozessor; und
einen Datenspeicher, der Instruktionen enthält, die durch den Prozessor ausgeführt werden können, um den Cache-Proxy zu veranlassen, einen Satz Funktionen auszuführen, wobei der Satz Funktionen Folgendes enthält:

Empfangen einer Qualitätsfunktion für ein Inhaltsobjekt, wobei die empfangene Qualitätsfunktion eine mathematische Beziehung zwischen einem gegebenen Quality-of-Service (QoS)-Wert, der an einem Empfänger (212) anliegt, und einer geschätzten wahrgenommenen Qualität des Inhaltsobjekts in dem Empfänger ausdrückt;
Empfangen eines berichteten QoS-Wertes von dem Empfänger;
Verwenden der empfangenen Qualitätsfunktion zum Schätzen der wahrgenommenen Qualität des Inhaltsobjekts in dem Empfänger auf der Basis des berichteten QoS-Wertes; und
Anwenden einer Inhaltsreplik-Platzierungsstrategie, die mindestens zum Teil auf der geschätzten wahrgenommenen Qualität des Inhaltsobjekts in dem Empfänger basiert, wobei das Anwenden der Inhaltsreplik-Platzierungsstrategie umfasst, eine Replik des Inhalts über einen Satz aus einem oder mehreren zusätzlichen Cache-Proxys (220) zu verteilen.

12. Cache-Proxy (220) nach Anspruch 11, wobei das Inhaltsobjekt unter Verwendung von Dynamic Adaptive Streaming over HyperText Transfer Protocol (HTTP) (DASH)-Streaming gestreamt wird, und wobei das Empfangen der Qualitätsfunktion das Empfangen der Qualitätsfunktion in einer Media Presentation Description (MPD)-Kommunikation umfasst.

13. Cache-Proxy (220) nach Anspruch 11, wobei das Inhaltsobjekt unter Verwendung von Real Time Streaming Protocol (RTSP)-Streaming gestreamt wird, und wobei das Empfangen der Qualitätsfunktion das Empfangen der Qualitätsfunktion in einer Session Description Protocol (SDP)-Kommunikation umfasst.

14. Cache-Proxy (220) nach Anspruch 11, wobei das Inhaltsobjekt unter Verwendung von Real Time Streaming Protocol (RTSP)-Streaming gestreamt wird, und wobei das Empfangen der Qualitätsfunktion das Empfangen der Qualitätsfunktion in einer Real-Time Control Protocol (RTCP)-Kommunikation umfasst.

## Revendications

1. Procédé, effectué par un proxy de mémoire cache (220), de distribution de contenu, le procédé comprenant :

la réception d'une fonction de qualité pour un objet de contenu, dans lequel la fonction de qualité exprime une relation mathématique entre une valeur de qualité de service, QoS, donnée observée par un récepteur (212) et une qualité perçue estimée de l'objet de contenu au récepteur ;
la réception d'une valeur de QoS rapportée en provenance du récepteur ;
l'utilisation de la fonction de qualité reçue pour estimer la qualité perçue de l'objet de contenu au récepteur sur la base de la valeur de QoS rapportée ; et
l'application d'une stratégie de placement de réplique de contenu qui est basée au moins en partie sur la qualité perçue estimée de l'objet de contenu au récepteur,
dans lequel la mise en oeuvre de ladite stratégie de placement de réplique de contenu comprend la distribution d'une réplique du contenu à travers un ensemble d'un ou plusieurs proxys de mémoire cache supplémentaires (200).

2. Procédé selon la revendication 1, dans lequel l'objet de contenu est diffusé en streaming en utilisant un streaming adaptatif dynamique sur protocole de transfert hypertexte, HTTP, DASH, et dans lequel la réception de la fonction de qualité comprend la réception de la fonction de qualité dans une communication de description de présentation multimédia, MPD.

3.  Procédé selon la revendication 1, dans lequel l'objet de contenu est diffusé en streaming en utilisant un protocole de streaming en temps réel, RTSP, et dans lequel la réception de la fonction de qualité comprend la réception de la fonction de qualité dans une communication de protocole de description de session, SDP.

4.  Procédé selon la revendication 1, dans lequel l'objet de contenu est diffusé en streaming en utilisant un protocole de streaming en temps réel, RTSP, et dans lequel la réception de la fonction de qualité comprend la réception de la fonction de qualité dans une communication de protocole de commande en temps réel, RTCP.

5.  Procédé selon la revendication 1, dans lequel la valeur de QoS rapportée est sélectionnée dans le groupe se composant de (i) un débit binaire entre le proxy de mémoire cache et le récepteur et (ii) un taux de perte de paquet entre le proxy de mémoire cache et le récepteur.

6.  Procédé selon la revendication 1, dans lequel la qualité perçue estimée est un rapport de signal de pointe sur bruit, PSNR.

7.  Procédé selon la revendication 1, dans lequel la qualité perçue estimée est sélectionnée dans le groupe se composant d'une qualité visuelle reconstruite, d'un retard de réseau, d'une variation de retard, d'un sautillement, d'un effet de blocage, et d'un flou.

8.  Procédé selon la revendication 1, dans lequel la fonction de qualité est calculée à un codeur et la fonction de qualité est basée au moins en partie sur une qualité visuelle initiale de l'objet de contenu.

9.  Procédé selon la revendication 1, comprenant en outre :

    la réception d'une valeur de QoS supplémentaire en provenance d'un ou plusieurs récepteurs supplémentaires ; et
    l'utilisation de la fonction de qualité reçue pour estimer une qualité perçue supplémentaire de l'objet de contenu à chacun des récepteurs supplémentaires sur la base de l'une ou plusieurs valeurs de QoS supplémentaires reçues,
    dans lequel la stratégie de placement de réplique de contenu est basée au moins en partie sur la qualité perçue estimée de l'objet de contenu au récepteur et au moins en partie sur la qualité perçue supplémentaire estimée de l'objet de contenu à chacun des récepteurs supplémentaires.

10. Procédé selon la revendication 1, dans lequel l'application de ladite stratégie de réplique de contenu comprend le retrait d'un ou plusieurs contenus mémorisés de la mémoire de réseau dudit proxy de mémoire cache (220).

11. Proxy de mémoire cache (220) incluant :

    un processeur ; et
    une mémoire de données contenant des instructions exécutables par le processeur pour amener le proxy de mémoire cache à effectuer un ensemble de fonctions, l'ensemble de fonctions incluant :

        la réception d'une fonction de qualité pour un objet de contenu, dans lequel la fonction de qualité reçue exprime une relation mathématique entre une valeur de qualité de service, QoS, donnée observée par un récepteur (212) et une qualité perçue estimée de l'objet de contenu donné au récepteur ;
        la réception d'une valeur de QoS rapportée en provenance du récepteur ;
        l'utilisation de la fonction de qualité reçue pour estimer la qualité perçue de l'objet de contenu au récepteur sur la base de la valeur de QoS rapportée ; et
        l'application d'une stratégie de placement de réplique de contenu qui est basée au moins en partie sur la qualité perçue estimée de l'objet de contenu au récepteur, dans lequel l'application de ladite stratégie de placement de réplique de contenu comprend la distribution d'une réplique du contenu à travers un ensemble d'un ou plusieurs proxys de mémoire cache supplémentaires (200).

12. Proxy de mémoire cache (220) selon la revendication 11, dans lequel l'objet de contenu est diffusé en streaming en utilisant un streaming adaptatif dynamique sur protocole de transfert hypertexte, HTTP, DASH, et dans lequel la réception de la fonction de qualité comprend la réception de la fonction de qualité dans une communication de

EP 2 673 935 B1

description de présentation multimédia, MPD.

13. Proxy de mémoire cache (220) selon la revendication 11, dans lequel l'objet de contenu est diffusé en streaming en utilisant un protocole de streaming en temps réel, RTSP, et dans lequel la réception de la fonction de qualité comprend la réception de la fonction de qualité dans une communication de protocole de description de session, SDP.

14. Proxy de mémoire cache (220) selon la revendication 11, dans lequel l'objet de contenu est diffusé en streaming en utilisant un protocole de streaming en temps réel, RTSP, et dans lequel la réception de la fonction de qualité comprend la réception de la fonction de qualité dans une communication de protocole de commande en temps réel, RTCP.

FIG. 1A

FIG. 1B

FIG. 1C

FIG. 2

EP 2 673 935 B1

FIG. 3

EP 2 673 935 B1

FIG. 4

FIG. 5

**EP 2 673 935 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080222154 A1